(19) Europäisches Patentamt / European Patent Office / Office européen des brevets

(11) **EP 3 000 002 B1**

(12) **FASCICULE DE BREVET EUROPEEN**

(45) Date de publication et mention
de la délivrance du brevet:
**05.04.2017 Bulletin 2017/14**

(21) Numéro de dépôt: **14729942.4**

(22) Date de dépôt: **20.05.2014**

(51) Int Cl.:
*G05B 19/4097* (2006.01)     *B29C 70/30* (2006.01)

(86) Numéro de dépôt international:
**PCT/FR2014/000108**

(87) Numéro de publication internationale:
**WO 2014/188084 (27.11.2014 Gazette 2014/48)**

(54) **PROCEDE DE DEFINITION DE TRAJECTOIRES DE FIBRE A PARTIR D'UNE SURFACE DE TRANSFERT**

VERFAHREN ZUM DEFINIEREN VON FASERPFADEN AUS EINER TRANSFEROBERFLÄCHE

METHOD FOR DEFINING FIBRE PATHS FROM A TRANSFER SURFACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.05.2013 FR 1301172**

(43) Date de publication de la demande:
**30.03.2016 Bulletin 2016/13**

(73) Titulaire: **Coriolis Software**
**56530 Queven (FR)**

(72) Inventeur: **MUNAUX, Olivier**
**F-56270 Ploemeur (FR)**

(56) Documents cités:
**US-A- 5 041 179**

**EP 3 000 002 B1**

**Description**

La présente invention concerne la fabrication de pièces en matériau composite par des machines de drapage de fibres automatiques, et plus particulièrement un procédé de définition des trajectoires de fibre sur une surface de drapage pour machines de drapage automatique.

Il est connu de réaliser des pièces en matériau composite par des procédés dits de placement de fibres, en superposant plusieurs plis de fibres dans des directions différentes. Dans la présente, l'expression « placement de fibres » désigne le placement de mèches, dans lequel chaque pli est réalisé par dépose au contact sur un moule de bandes les unes à côté des autres, chaque bande étant formée de plusieurs mèches indépendantes disposées côté à côte, ainsi que le placement de bandes dans lequel chaque pli est réalisé par dépose au contact sur un moule de bandes les unes à côté des autres, chaque bande étant formée d'une seule mèche, de largeur plus importante que dans le cas de placement de mèches. Les mèches classiquement utilisées sont unidirectionnelles et comprennent une multitude de filaments. Les fibres déposées peuvent être pré-imprégnées de résine ou non. La technologie de placement de mèches, utilisant des mèches de plus faible largeur, permet de draper sur des surfaces de drapage de formes complexes. Les pièces sont fabriquées par des machines de placement automatiques, auxquelles il convient de fournir les trajectoires de fibres pour réaliser les plis. Dans le cas de placement de mèches, ces machines sont classiquement appelées machines de placement de fibres ou machines AFP (Automated Fiber Placement), et machines de placement de bandes ou machines ATP (Automated Tape Placement) dans le cas de placement de bandes.

Les trajectoires de fibre sont classiquement définies par logiciel au moyen d'une rosette, constituée d'un système d'axes associé à une méthode de transfert, qui permet de définir une direction de fibre en tout point d'une surface. Il existe aujourd'hui différentes rosettes, basées sur des méthodes de transfert différentes, qui sont reconnues et utilisées dans le secteur aéronautique en fonction de la surface de drapage, telles que par exemple la rosette cartésienne ou la rosette translation.

Chaque trajectoire est générée en définissant la direction de la trajectoire en différents points d'analyse de la surface de drapage, appelés également points de propagation, par transfert du système d'axes audit point d'analyse selon la méthode de transfert associée. Ces transferts du système d'axes pour les points de propagation nécessitent des temps de calcul qui peuvent s'avérer relativement longs, notamment dans le cas de surfaces complexes.

Les trajectoires obtenues sont ensuite classiquement soumises à une analyse de courbure, communément appelée analyse de « steering », et/ou une analyse de déviation angulaire. L'analyse de steering en un point d'analyse d'une trajectoire consiste à calculer la valeur du rayon de courbure moyen dans le plan tangent à la surface au point d'analyse.

Suivant ces résultats d'analyse, les trajectoires doivent être redéfinies manuellement pour adapter les trajectoires aux rayons de courbures minimaux acceptables ou réalisables avec une fibre donnée, et aux déviations angulaires maximales souhaitées par le concepteur de la pièce. De ce fait, la définition de trajectoires peut s'avérer longue et fastidieuse.

Dans le cas de surfaces de drapage non continues comprenant des renfoncements et/ou bossages, notamment pour la réalisation de renforts, le positionnement de renforts préfabriqués, le positionnement de nids d'abeille ou autres, la définition de trajectoires satisfaisantes au niveau de ces discontinuités s'avèrent compliquée, et nécessite de longues opérations manuelles.

Le document US-A-5 041 179 divulgue un procédé de définition de trajectoires de fibre sur une surface de drapage et un procédé de fabrication de pièces en matériau composite par une machine de drapage de fibres automatique selon l'état de la technique.

Le but de la présente invention est de proposer une solution visant à pallier au moins l'un des inconvénients précités.

A cet effet, la présente invention propose un procédé de définition de trajectoires de fibre sur une surface de drapage pour la réalisation d'au moins un pli d'orientation théorique donnée, pour la réalisation de pièces en matériau composite par drapage de fibres, caractérisé en ce qu'il comprend :

- la définition d'un maillage éléments finis de la surface de drapage,
- la définition d'un maillage de transfert éléments finis d'une surface de transfert correspondant à une surface simplifiée, sensiblement continue, de la surface de drapage,
 la direction d'une fibre en un point d'analyse d'une maille de la surface de drapage, pour la définition de la trajectoire de ladite fibre pour au moins une orientation de plis, étant obtenue par
- la définition d'un point projeté obtenu par projection normale d'un point d'analyse de ladite maille, sur le maillage de transfert,
- la définition d'une direction de référence audit point projeté, à partir de données de direction associées à une méthode de transfert,
- la définition de la normale à la maille de transfert,

- la définition d'un plan de coupe ledit plan de coupe étant défini par le point projeté, ladite direction de référence et ladite normale,
- la définition de la ligne d'intersection du plan de coupe avec le plan de la maille, la direction de la fibre au point d'analyse étant obtenue à partir de la direction de cette ligne d'intersection.

L'utilisation d'une telle surface de transfert simplifiée pour le transfert de données de direction s'avère particulièrement efficace pour définir des trajectoires acceptables en terme de rayon de courbure et de déviation angulaire dans le cas de surfaces de drapage non continues, présentant des renfoncements et/ou des bossages générant des rampes.

Le procédé selon l'invention peut être mis en oeuvre de manière automatique sous la forme d'un logiciel. Le procédé selon l'invention peut être utilisé pour la réalisation de pièces en matériau composite par drapage de fibres, que ce soit par drapage au contact, tel que par placement de mèches ou par placement de bandes, ou par drapage sans contact tel que par enroulement filamentaire. Le procédé selon l'invention présente un intérêt tout particulier dans le cas de placement de mèches sur des surfaces de drapage non planes.

Les données de direction associées une méthode de transfert sont constituées d'une rosette classique ou d'une combinaison de rosettes classiques, ou d'une grille de contraintes et/ou de courbes de contraintes, associée à une méthode de transfert comprenant une méthode de pondération de vecteurs de contrainte desdites courbes et/ou de ladite grille, tel que décrit dans la demande de brevet déposée par la demanderesse et intitulée « Procédé de définition de trajectoires de fibre à partir de courbes ou grille de contrainte »

La présente invention a également pour objet un procédé de fabrication de pièces en matériau composite par une machine de drapage de fibres automatique, caractérisé en ce que les trajectoires de fibres pour le drapage de plis par la machine de drapage sont définies par le procédé de définition de trajectoire décrit précédemment.

La présente invention a également pour objet un programme d'ordinateur comportant un ensemble d'instructions aptes à mettre en oeuvre le procédé de définition de trajectoire tel que décrit précédemment, lorsque ledit programme est exécuté sur un ordinateur.

L'invention sera mieux comprise, et d'autres buts, détails, caractéristiques et avantages apparaîtront plus clairement au cours de la description explicative détaillée qui va suivre de plusieurs modes de réalisation particuliers actuellement préférés de l'invention, en référence aux dessins schématiques annexés, sur lesquels :

- la figure 1 est un schéma général illustrant différents modes de réalisation du procédé selon l'invention ;
- la figure 2 est une vue en perspective d'un exemple de surface de drapage;
- la figure 3 est un schéma illustrant un procédé de définition de trajectoires, utilisant un champ vectoriel obtenu à partir d'une rosette classique ;
- la figure 4 est une vue en perspective du champ vectoriel obtenu selon le procédé de la figure 3 ;
- la figure 5 est une vue agrandie partielle de la figure 4 ;
- la figure 6A est une vue en perspective de trajectoires de fibre pour un pli à 0°, obtenues à partir du champ vectoriel de la figure 4, et la figure 6B est une analyse de rayon courbure desdites trajectoires ;
- la figure 7A est une vue en perspective des trajectoires de fibres pour un pli à 90°, obtenues à partir du champ vectoriel de la figure 4, et la figure 7B est une analyse de rayon de courbure desdites trajectoires ;
- la figure 8 est un schéma illustrant un procédé de définition de trajectoires utilisant un champ vectoriel obtenu à partir d'une grille de vecteurs de contrainte ;
- la figure 9 est une vue schématique en perspective de la grille de contraintes définie à partir de la surface de drapage ;
- la figure 10 est un schéma illustrant la méthode de définition du vecteur directeur d'une maille à partir d'un point projeté sur la grille de contraintes ;
- la figure 11 est une vue en perspective du champ vectoriel obtenu selon le procédé de la figure 8, avec la grille de contraintes de la figure 9, et la figure 12 est une vue agrandie partielle de la figure 11 ;
- la figure 13A est une vue en perspective des trajectoires de fibres pour un pli à 0° obtenues à partir du champ vectoriel de la figure 11, la figure 13B étant une analyse de rayon courbure desdites trajectoires ;
- la figure 14A est une vue en perspective des trajectoires de fibres pour un pli à 90° obtenues à partir du champ vectoriel de la figure 11, et la figure 14B est une analyse de rayon de courbure desdites trajectoires ;
- la figure 15 est un schéma illustrant un procédé de définition de trajectoires, utilisant un champ vectoriel obtenu à partir de courbes de contraintes ;
- la figure 16 est un schéma illustrant la méthode de définition d'un vecteur directeur du champ vectoriel à partir de courbes de contraintes ;
- la figure 17 est un schéma illustrant un procédé de définition de trajectoires, utilisant un champ vectoriel obtenu à partir de courbes de contraintes, lesdites courbes de contraintes étant obtenues à partir d'une grille de déviation angulaire ;
- la figure 18 est une vue schématique en perspective de la grille de déviation angulaire définie à partir de la surface de drapage ;

- la figure 19 est un schéma illustrant la méthode pour générer les courbes de contraintes à partir de la grille de déviation angulaire de la figure 18 ;
- la figure 20 est une vue de courbes de contraintes générées à partir de la grille de déviation angulaire de la figure 18 et d'une rosette classique ;
- la figure 21 est un schéma illustrant la méthode pour définir le vecteur directeur d'une maille à partir des courbes de déviation angulaire ;
- la figure 22 est une vue partielle du champ de vecteur obtenu à partir de la grille de déviation angulaire ;
- la figure 23 est une analyse de rayon de courbure de trajectoires obtenues à partir du champ vectoriel de la figure 22 pour un pli à 90°;
- la figure 24 est un schéma illustrant un procédé de définition de trajectoires, selon un mode de réalisation de l'invention, utilisant un champ vectoriel obtenu à partir d'une surface de transfert ;
- la figure 25 est un schéma illustrant la méthode de définition d'un vecteur directeur du champ vectoriel à partir d'une surface de transfert ;
- la figure 26A est une vue en perspective de trajectoires de fibre obtenues avec une surface de transfert ;
- la figure 26B est une vue agrandie partielle de la figure 26A ;
- la figure 27 est une vue analogue à celle de la figure 26B, les trajectoires étant obtenues sans utilisation de la surface de transfert ;
- la figure 28 est un schéma de principe d'un procédé de définition de trajectoires, selon un autre mode de réalisation de l'invention, utilisant un champ vectoriel obtenu à partir d'une grille de déviation angulaire et d'une surface de transfert ;
- la figure 29 est un schéma illustrant la méthode de définition d'une direction de référence pour la définition d'une direction de propagation pour le procédé de la figure 28 ; et,

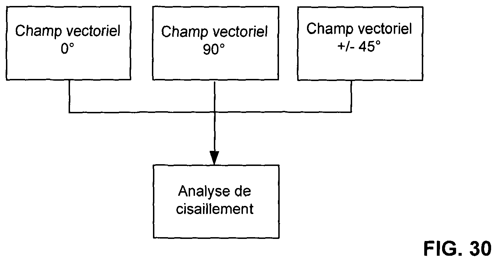

- la figure 30 est un schéma illustrant une étape d'analyse de cisaillement à partir de plusieurs champs vectoriels.

Selon l'invention, , tel que représenté sur la figure, les trajectoires de fibres sont définies à partir d'une surface de transfert en utilisant éventuellement des rosettes classiques, des courbes de contraintes et/ou une grille de contraintes, et/ou des courbes de contraintes obtenues à partir d'une grille de déviation angulaire. Les trajectoires peuvent être générées en passant par un champ vectoriel constitué d'un maillage de la surface de drapage dans lequel un vecteur directeur est associé à chaque maille.

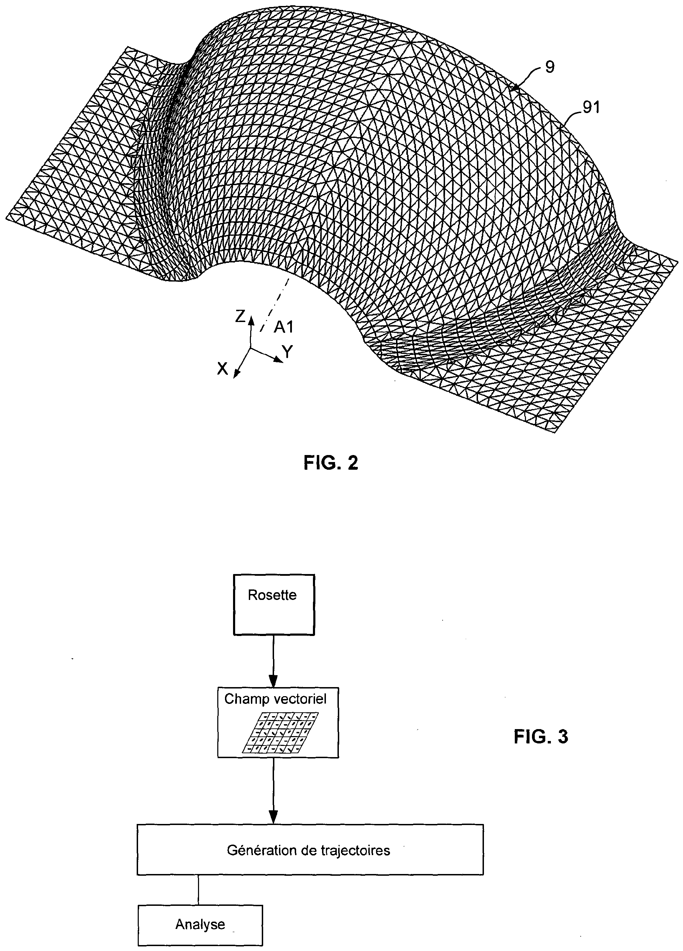

La figure 2 illustre une surface de drapage 9, cette surface de drapage est une surface à double courbure, et est définie par un maillage 91 éléments finis.

La figure 3 illustre un champ vectoriel est obtenu à partir d'une rosette classique, telle qu'une rosette cartésienne, comprenant un repère de référence défini par trois vecteurs orthogonaux X, Y, Z et une méthode de transfert cartésien. Dans le cas de la surface de drapage de la figure 2, le vecteur X de la rosette dite globale est aligné avec l'axe principal $A_1$ ou axe de révolution de la surface de drapage.

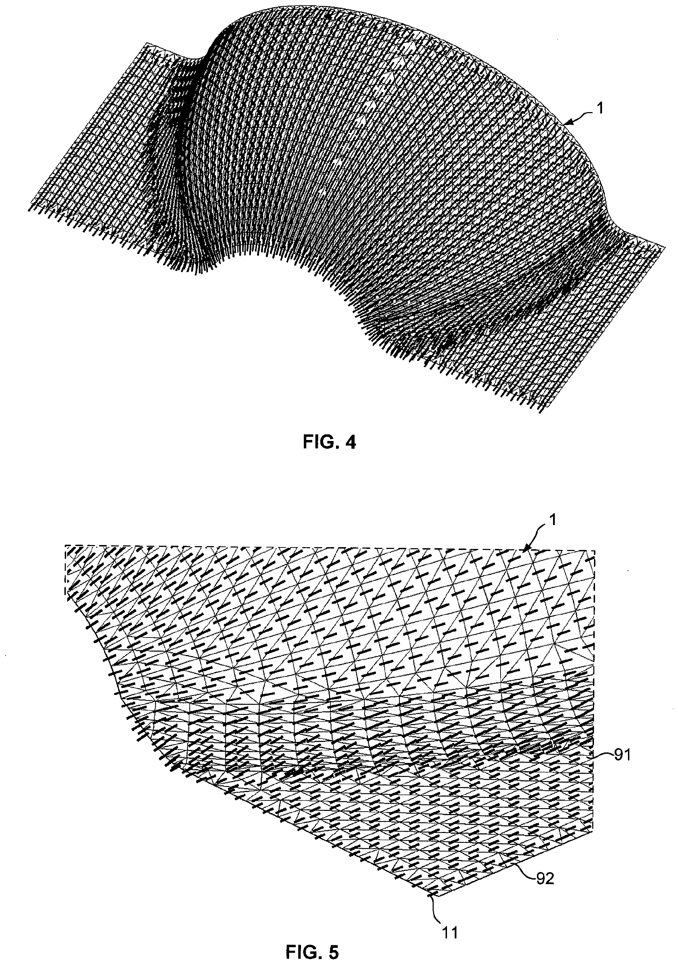

Le champ vectoriel est obtenu par transfert cartésien du vecteur X de la rosette globale sur chaque maille 92 du maillage, le transfert cartésien du vecteur X sur la maille consistant en une projection normale du vecteur X sur le plan de la maille concernée, le vecteur projeté de la rosette dite projetée constituant le vecteur directeur 11 de la maille. Les figures 4 et 5 illustrent le champ vectoriel 1 résultant.

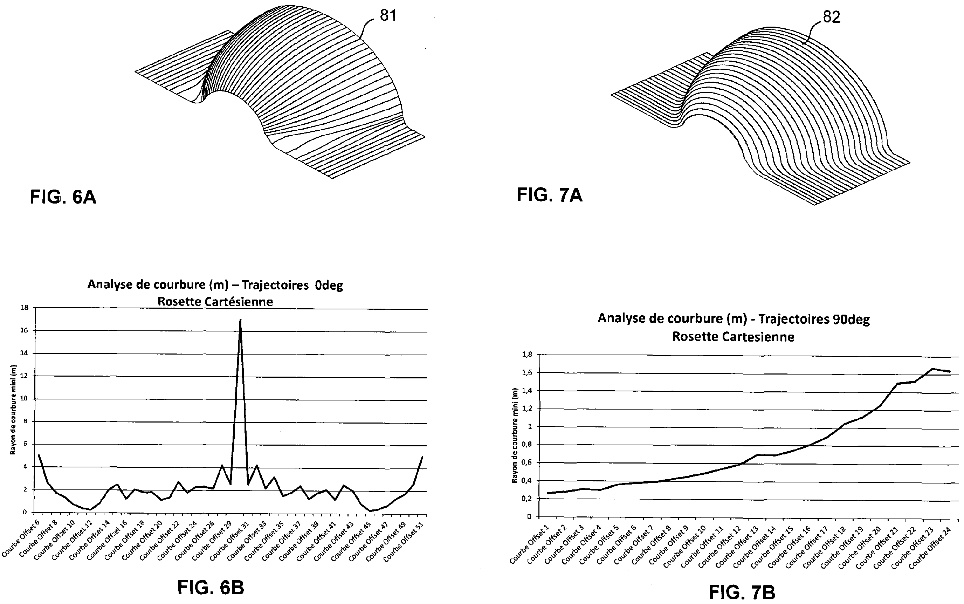

Des trajectoires 81 de fibre pour une orientation de pli à 0° peuvent ensuite être générées à partir de ce champ vectoriel 1, tel qu'illustré à la figure 6A. Chaque trajectoire est générée en définissant la direction de la trajectoire en différents points d'analyse, appelés également points de propagation, la direction en un point de propagation est celle du vecteur directeur de la maille à laquelle appartient ledit point de propagation.

Une analyse de rayon de courbure peut ensuite être effectuée sur ces trajectoires ainsi obtenues. La figure 6B illustre le rayon de courbure minimum de chaque trajectoire. Cette analyse de rayon de courbure montre des rayons de courbure importants, incompatibles par exemple avec le placement de mèches d'un quart de pouce de largeur, pour les lesquelles un rayon de courbure minimal d'environ 2 mètres est classiquement préconisé.

Une analyse de rayon de courbure et/ou de déviation angulaire peut être effectuée directement à partir du champ vectoriel, sans générer de trajectoires, cette analyse pouvant par exemple être visualisée sur le champ vectoriel en attribuant aux vecteurs des couleurs différentes en fonction des valeurs de rayon de courbure ou de déviation angulaire.

Des trajectoires de fibre pour d'autres orientations de pli, telles que 90°, +45° ou -45°, peuvent être générées à partir du même champ vectoriel 1, en effectuant une rotation correspondante des vecteurs directeurs. La figure 7A illustre des trajectoires de fibre pour une orientation de pli à 90°, obtenues en effectuant une rotation de 90° des vecteurs directeurs du champ vectoriel 1. La figure 7B illustre le rayon de courbure minimum de chaque trajectoire.

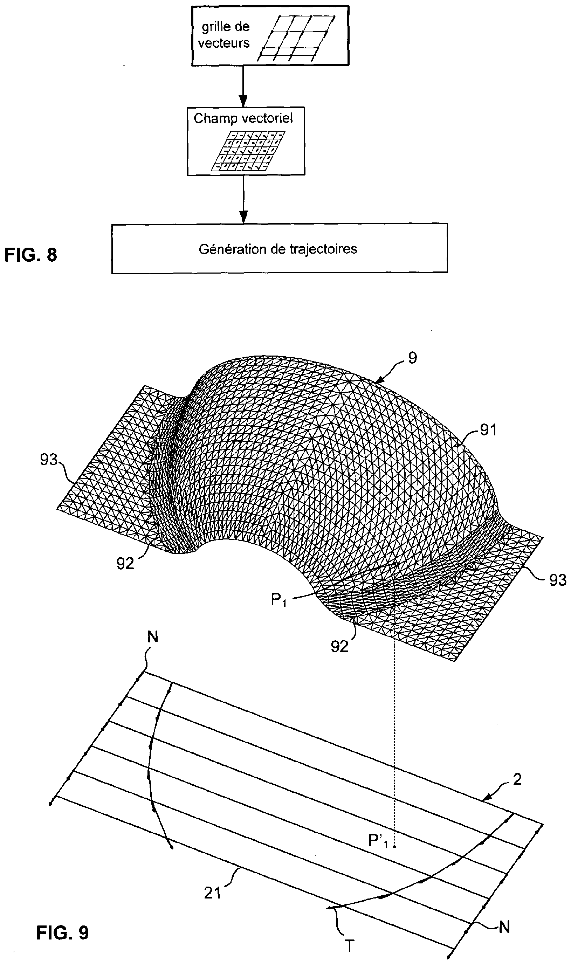

La figure 8 illustre un obtenu à partir d'une grille de contraintes, afin de prendre en compte des contraintes de conception et/ou de fabrication dans la définition des trajectoires, et ainsi obtenir des trajectoires avec des rayons de courbure acceptables.

En référence à la figure 9, on définit dans un premier temps une grille de contraintes 2, appelée également grille de vecteurs de contrainte. Dans cet exemple, la grille de contraintes est définie en fonction de contraintes géométriques de la surface de drapage, les contraintes géométriques étant ici les suivantes :

- les fibres de plis à 0° doivent suivre les génératrices 92 des rayons de raccordement entre la partie centrale globalement tronconique de la surface de drapage et les parties planes de part et d'autre de ladite partie tronconique, et
- les fibres de plis à 0° doivent être alignées avec les bords extérieurs 93 des parties planes.

Un maillage 21 est défini à partir de ces contraintes géométriques, chaque maille du maillage étant formée d'au moins quatre noeuds, puis un vecteur de contrainte T est assigné à chaque noeud N dudit maillage pour former la grille de contraintes 2.

Pour former le champ vectoriel, le vecteur directeur de chaque maille du maillage est défini de la manière suivante.

Tel qu'illustré à la figure 9, on effectue une projection normale du point central $P_1$ de la maille, au point le plus proche, sur la grille de contraintes.

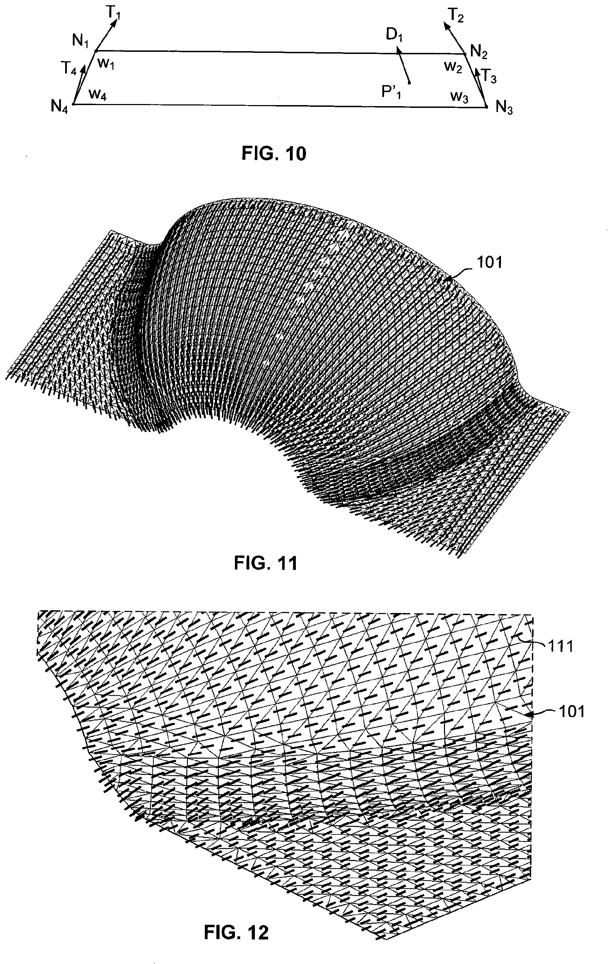

En référence à la figure 10, on effectue ensuite un calcul des poids normalisés $w_1$, $w_2$, $w_3$, $w_4$ au point projeté $P'_1$ des quatre noeuds $N_1$, $N_2$, $N_3$, $N_4$ qui sont associés audit point projeté, à savoir les quatre noeuds qui définissent la maille à laquelle ledit point projeté appartient. Ces poids normalisés, également appelés coordonnées barycentriques du point projeté, sont calculés selon une méthode connue en soi, en fonction de la distance entre ledit point projeté et lesdits noeuds. On détermine ensuite le vecteur $D_1$ au point projeté par pondération des quatre vecteurs $T_1$, $T_2$, $T_3$, $T_4$ par leurs poids normalisés respectifs $w_1$, $w_2$, $w_3$, $w_4$ :

$$D_1 = \| T_1 \times w_1 + T_2 \times w_2 + T_3 \times w_3 + T_4 \times w_4 \|$$

Le vecteur directeur de la maille est ensuite obtenu par un transfert par projection normale de ce vecteur $D_1$ au point central $P_1$ de la maille.

Les figures 11 et 12 illustrent le champ vectoriel 101 résultant, dans lequel un vecteur directeur 111 est associé à chaque maille.

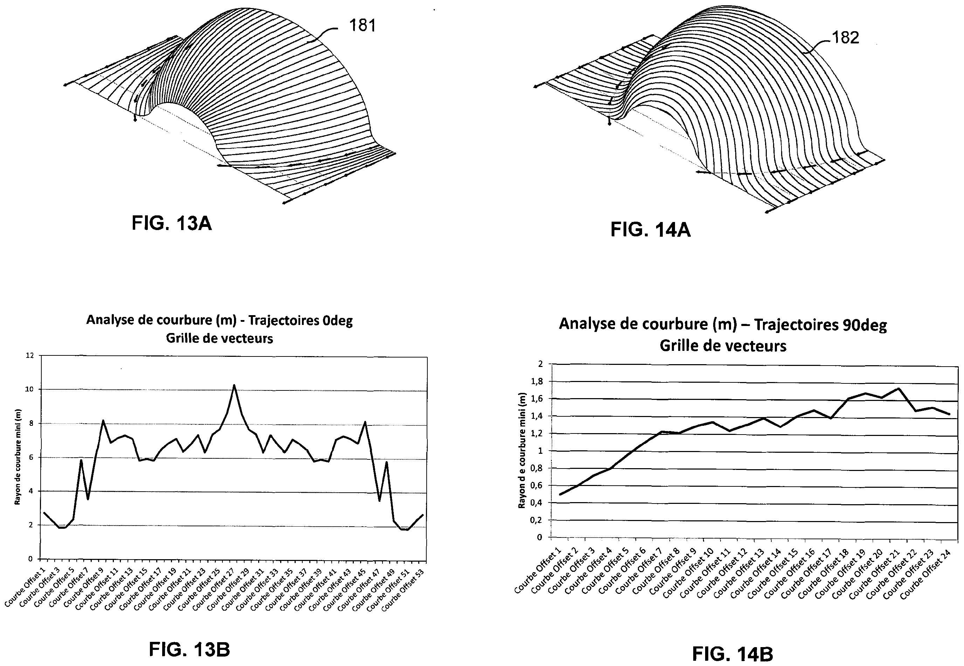

Les figures 13A et 13B illustrent respectivement les trajectoires 181 pour un pli à 0°, obtenues à partir de ce champ vectoriel, et les résultats de l'analyse de rayon de courbure correspondante. Les figures 14A et 14B illustrent respectivement les trajectoires 182 pour un pli à 90°, obtenues à partir de ce champ vectoriel, après une rotation de 90° des vecteurs directeurs, et les résultats de l'analyse de rayon de courbure correspondante. Des comparaisons des figures 6B et 7B avec respectivement les figures 13B et 14B montrent que les trajectoires obtenues avec la grille de contraintes présentent des rayons de courbure minimaux plus importants que ceux des trajectoires résultant d'une rosette cartésienne.

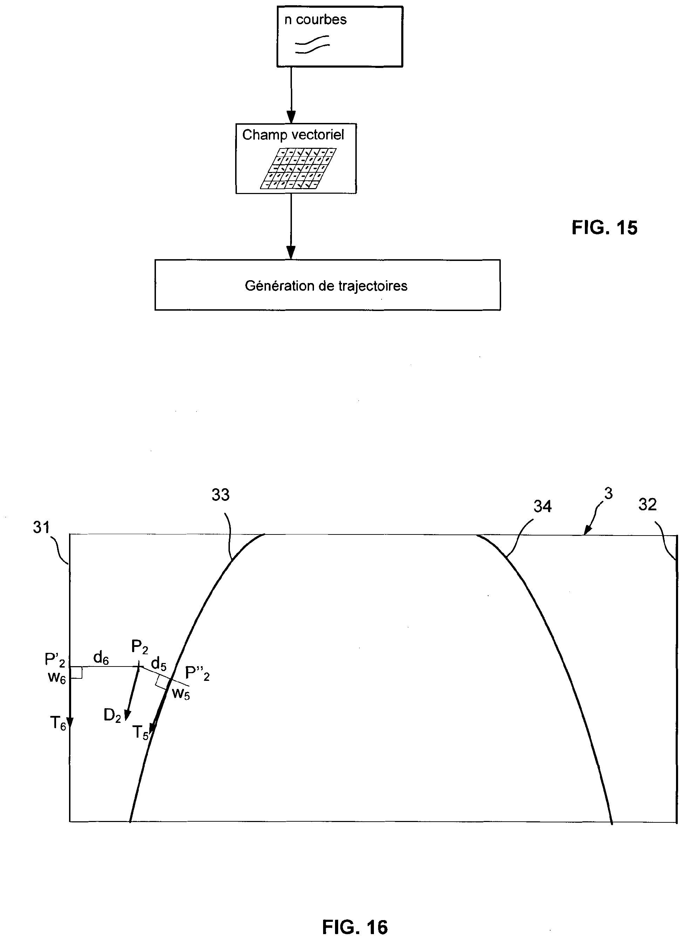

La figure 15 illustre un champ vectoriel obtenu à partir de courbes de contraintes. Les contraintes géométriques représentées sous la forme de la grille de contraintes 2 dans le mode de réalisation précédent sont ici représentées sous la forme de courbes de contraintes.

En référence à la figure 16, les courbes de contraintes, désignées globalement sous la référence 3, comprennent :

- deux courbes de contraintes 31, 32 linéaires correspondant aux bords extérieurs 93 de la surface de drapage, et
- deux courbes de contraintes 33, 34 incurvées correspondant à des génératrices de rayons de raccordement entre la partie centrale et les parties latérales de la surface de drapage.

Pour former le champ vectoriel, le vecteur directeur de chaque maille du maillage est défini de la manière suivante.

Considérant le point central $P_2$ d'une maille sur la figure 16, on effectue une projection normale dudit point central $P_2$ sur les deux courbes de contraintes 31, 33 les plus proches, entre lesquelles ledit point central est positionné. On définit ensuite auxdits points projetés $P'_2$ $P''_2$ les deux vecteurs $T_5$, $T_6$ tangents aux courbes. On calcule les poids normalisés $w_5$, $w_6$, au point central $P_2$ des deux points projetés, ces poids normalisés étant fonction des distances $d_5$ et $d_6$ entre le point central et les points projetés :

$$w_5 = 1 - (d_5 / (d_5 + d_6))$$

$$w_6 = 1 - (d_6 / (d_5 + d_6))$$

On définit ensuite le vecteur $D_2$, qui correspond au vecteur directeur de la maille, en pondérant les deux vecteurs tangents $T_5$, $T_6$ par leurs poids normalisés respectifs $w_5$, $w_6$ :

$$D_2 = \| T_5 \times w_5 + T_6 \times w_6 \|$$

Le vecteur $D_2$ de la maille correspond au vecteur directeur $D_2$ ainsi obtenu. Le champ vectoriel obtenu à partir de ces courbes de contraintes 3 est similaire de celui 101 obtenu précédemment au moyen de la grille de contraintes.

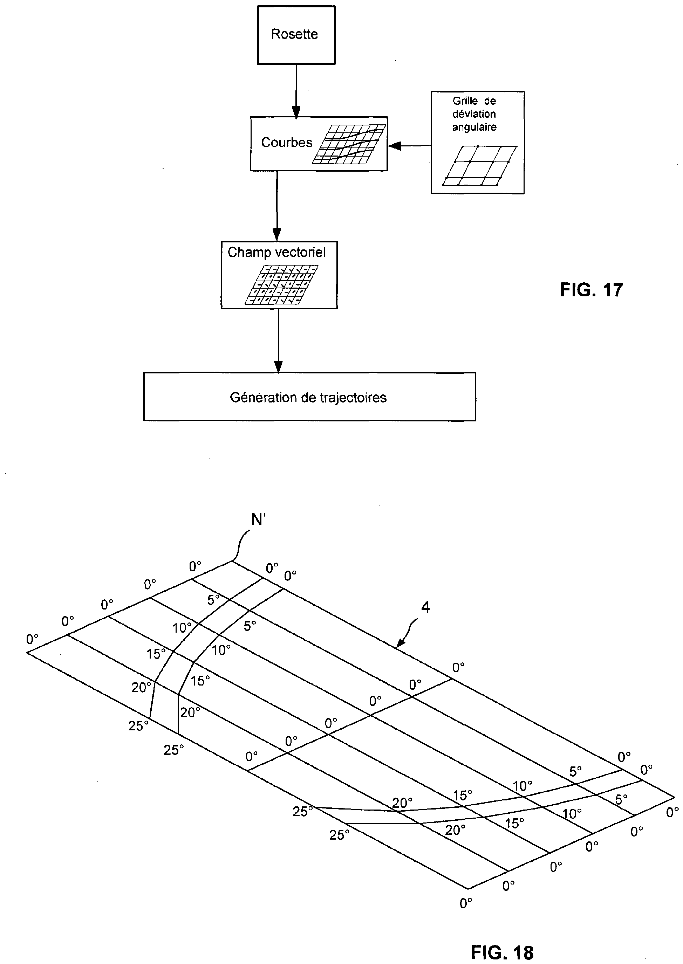

La figure 17 illustre un champ vectoriel obtenu à partir de courbes de contraintes qui sont définies à partir d'une grille de déviation angulaire.

En référence à la figure 18, on définit dans un premier temps une grille de déviation angulaire 4, dans laquelle chaque maille est définie par quatre noeuds N', et on assigne à chaque noeud de la grille une valeur de déviation angulaire maximale. Un exemple de valeurs de déviation assignées aux différents noeuds est donné à la figure 18.

Des courbes de contraintes sont générées sur la surface de drapage en définissant pour chaque courbe de contraintes des directions de propagation en différents points d'analyse appelés également points de propagation. La direction de propagation en un point de propagation $P_3$ est définie de la manière suivante.

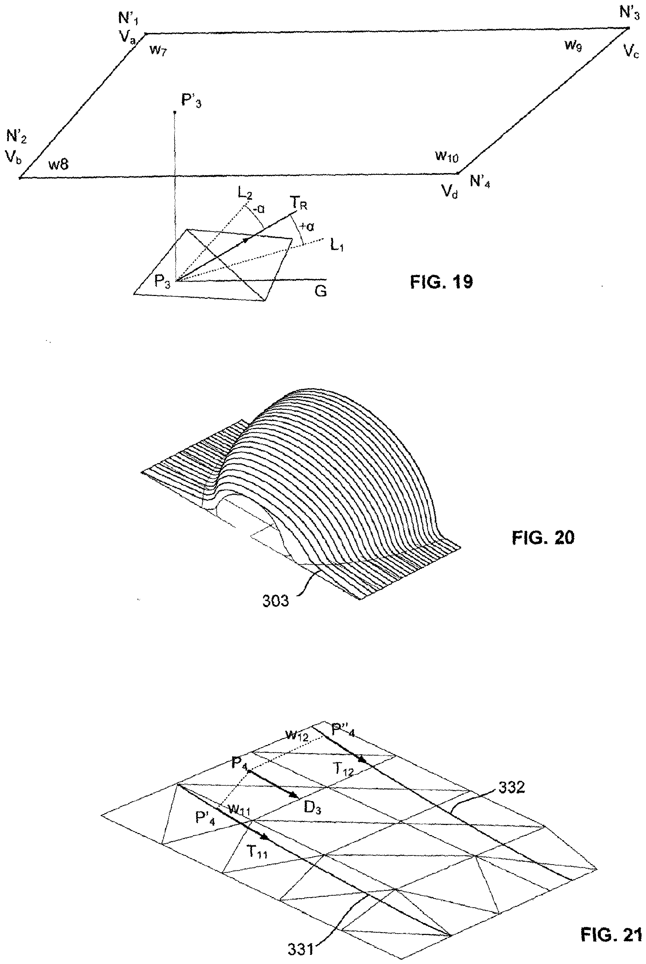

En référence à la figure 19, on définit une direction de référence audit point de propagation $P_3$, cette direction de référence $T_R$ étant dans ce mode de réalisation une direction obtenue par une rosette cartésienne, par transfert par projection normale du vecteur X de la rosette globale sur le plan de la maille de la surface de drapage à laquelle appartient ledit point de propagation $P_3$.

On effectue ensuite une projection normale dudit point $P_3$ sur la grille de déviation angulaire, le point projeté $P'_3$ appartenant par exemple à la maille de la grille définie par les quatre noeuds $N'_1$, $N'_2$, $N'_3$, $N'_4$. On effectue un calcul des poids normalisés $w_7$, $w_8$, $w_9$, $w_{10}$ au point projeté $P'_3$ des quatre noeuds. Ces poids normalisés, également appelés coordonnées barycentriques du point projeté, sont calculés selon une méthode connue en soi, en fonction de la distance entre ledit point projeté et lesdits noeuds. On effectue une pondération des quatre valeurs de déviation angulaire maximale $V_a$, $V_b$, $V_c$, $V_d$ par lesdits poids normalisés pour obtenir une valeur de déviation angulaire maximale $\alpha$ autorisée associée audit point projeté :

$$\alpha = w_7 \times V_a + w_8 \times V_b + w_9 \times V_c + w_{10} \times V_d$$

On détermine ensuite un secteur de tolérance autour de la direction de référence $T_R$ en définissant des directions limites $L_1$ et $L_2$ à un angle de $+\alpha$ et $-\alpha$ autour de la direction de référence. On détermine par ailleurs une direction géodésique G correspondant à la direction de propagation audit point de propagation $P_3$ d'une courbe géodésique.

On effectue ensuite une réorientation de la direction de référence dans les limites de la valeur de déviation angulaire autorisée. Si la direction géodésique G est incluse dans le secteur de tolérance, alors la direction de propagation au point de propagation est définie comme étant la direction géodésique. Si la direction géodésique n'est pas incluse dans le secteur de tolérance, alors la direction de propagation au point de propagation est définie comme étant la direction limite $L_1$ ou $L_2$ la plus proche de la direction géodésique.

La figure 20 illustre un exemple de courbes de contraintes, désignées sous la référence générale 303, obtenues pour des plis à 90°, à partir d'une rosette cartésienne et de la grille de déviation angulaire, avec les valeurs de déviation angulaire indiquées sur la figure 18.

L'obtention d'un champ vectoriel est réalisée selon la méthode décrite précédemment avec les courbes de contraintes 3 de la figure 16. Le vecteur directeur de chaque maille du maillage est défini de la manière suivante. En référence à la figure 21, on effectue une projection normale du point central $P_4$ de la maille sur les deux courbes de contraintes 331, 332 les plus proches. On définit ensuite auxdits points projetés $P'_4$, $P''_4$ les deux vecteurs $T_{11}$, $T_{12}$ tangents aux courbes. On calcule les poids normalisés $W_{11}$, $W_{12}$, au point central P' des deux points projetés, ces poids normalisés étant fonction des distances entre le point central et les points projetés. On définit ensuite le vecteur $D_3$, de la maille, en pondérant les deux vecteurs tangents $T_{11}$, $T_{12}$ par leurs poids normalisés respectifs $w_{11}$, $w_{12}$ :

$$D_3 = \| w_{11} \times T_{11} + w_{12} \times T_{12} \|$$

Le vecteur directeur de la maille correspond audit vecteur $D_3$, de préférence après une rotation de 90° dudit vecteur

$D_3$ pour avoir un champ vectoriel concernant par défaut les plis à 0°.

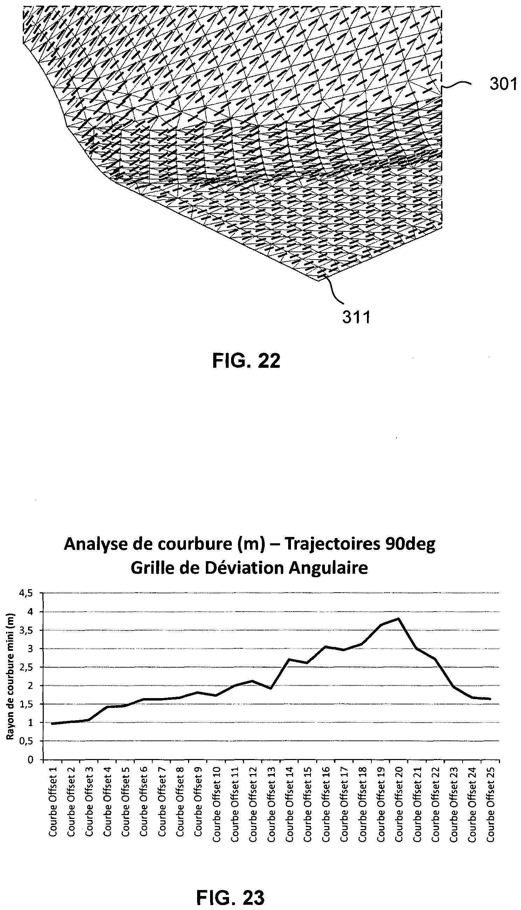

Le champ vectoriel 301 obtenu à partir de ces courbes de contraintes est illustré à la figure 22, le champ vectoriel comprenant un vecteur directeur 311 associé à chaque maille. Les résultats de l'analyse de rayon de courbure de trajectoires de fibres, obtenues à partir de ce champ vectoriel, ou correspondant aux courbes de contraintes 303 de la figure 20 sont illustrés à la figure 23. Ces résultats montrent une augmentation significative de rayons de courbure minimaux de trajectoires par rapport à ceux de trajectoires présentés à la figure 7B et obtenus simplement au moyen d'une rosette cartésienne.

Un champ vectoriel peut également être obtenu à partir d'une grille de vecteurs de contrainte et d'une grille de déviation angulaire. Dans ce cas, pour la génération des courbes de contraintes selon la méthode explicitée ci-dessus en référence à la figure 19, la définition de la direction de référence $T_R$ est réalisée, non pas à partir de la rosette cartésienne, mais à partir de la grille de vecteurs de contraintes, par projection normale du point $P_3$ sur la grille de contraintes et définition d'un vecteur $D_1$ selon la méthode de pondération explicitée précédemment en référence à la figure 10. La direction de référence $T_R$ de la maille est ensuite obtenue par un transfert par projection normale de ce vecteur $D_1$ au point $P_3$.

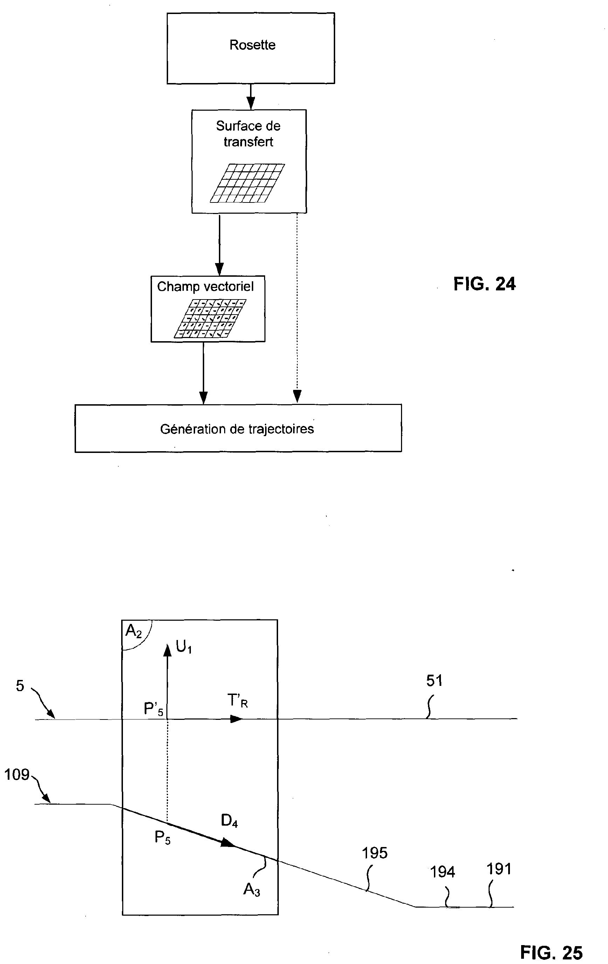

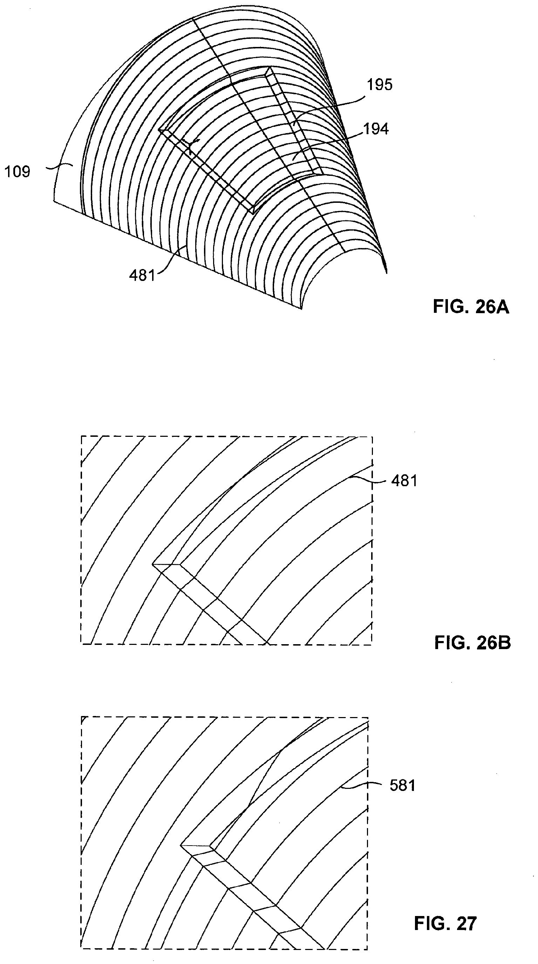

La figure 24 illustre un mode de réalisation de l'invention dans lequel le champ vectoriel est obtenu en utilisant une surface de transfert pour le transfert d'une rosette cartésienne. Ce type de champ vectoriel est approprié pour la définition de trajectoires sur une surface de drapage non continue, telle que la surface de drapage 109 qu'illustrée à la figure 26A. Cette surface de drapage est de forme générale tronconique et comprend un renfoncement 194 central, formant des rampes 195.

On définit une surface dite de transfert continue qui correspond à une surface simplifiée de la surface de drapage. Dans le présent cas, la surface de transfert correspond à la surface de drapage sans son renfoncement central. Cette surface de transfert est définie par un maillage dit de transfert.

Pour former le champ vectoriel, le vecteur directeur de chaque maille du maillage 191 de la surface de drapage est défini de la manière suivante, en référence à la figure 25 :

- définition d'un point projeté $P'_5$ obtenu par projection normale du point central $P_5$ de ladite maille sur le maillage de transfert 51,
- définition d'une direction de référence $T'_R$ audit point projeté $P'_5$, ladite direction de référence provenant ici d'une rosette cartésienne et étant obtenue par transfert de l'axe X de la rosette sur le plan de la maille de transfert à laquelle appartient ledit point projeté $P'_5$ ;
- définition de la normale $U_1$ à la maille de transfert ;
- définition d'un plan de coupe $A_2$, ledit plan de coupe étant défini par le point projeté $P'_5$, ladite direction de référence $T'_R$ et ladite normale $U_1$, et
- définition de la ligne d'intersection $D_4$ du plan de coupe $A_2$ avec le plan $A_3$ de la maille à laquelle appartient le point central, le vecteur directeur de la maille correspondant à la direction de cette ligne d'intersection.

Les figures 26A et 26B illustrent des trajectoires 481 de plis à 90°, obtenues avec un tel champ vectoriel, après rotation de 90° des vecteurs directeurs. La figure 31 illustre les trajectoires 581 obtenues avec un champ vectoriel défini à partir d'un transfert de rosette directement sur la surface de drapage, sans utilisation de la surface de transfert.

Selon une variante de réalisation de l'invention, tel qu'illustré par la flèche en traits discontinus sur la figure 24, les trajectoires sont générées directement, sans utiliser de champ vectoriel.

Selon un autre mode de réalisation, le champ vectoriel est obtenu à partir d'une grille de vecteurs de contrainte et d'une surface de transfert. Dans ce cas, pour la définition du plan de coupe $A_2$ selon la méthode explicitée ci-dessus en référence à la figure 25, la définition de la direction de référence $T'_R$ est réalisée, non pas à partir de la rosette cartésienne, mais à partir de la grille de vecteurs de contrainte, par projection normale du point $P'_5$ sur la grille de contraintes et définition d'un vecteur $D_1$ selon la méthode de pondération explicitée précédemment en référence à la figure 10. Le vecteur de référence $T'_R$ de la maille est ensuite obtenu par un transfert par projection normale de ce vecteur $D_1$ au point $P'_5$.

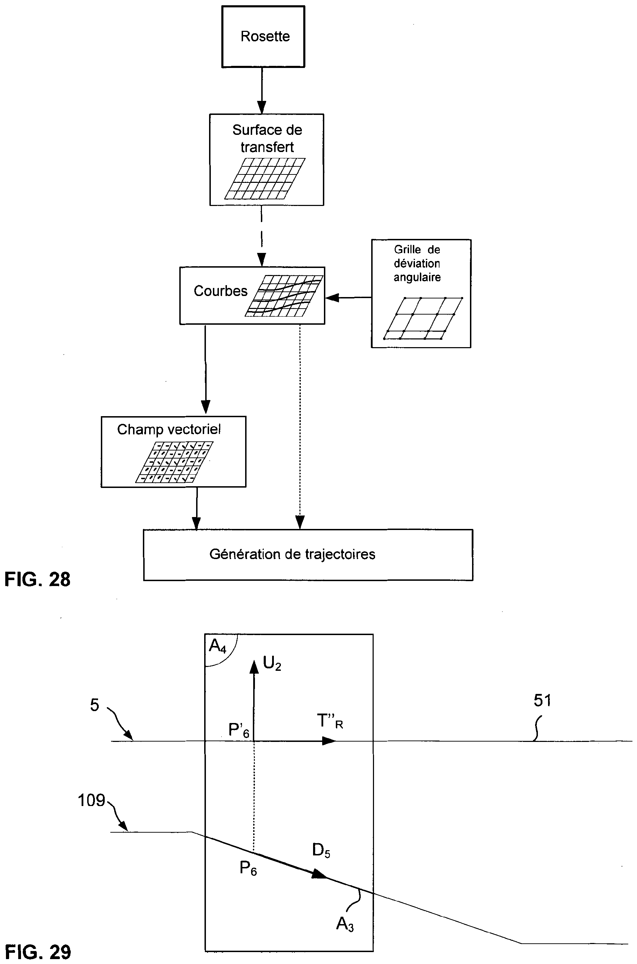

Selon un autre mode de réalisation illustré à la figure 28, le champ vectoriel est obtenu à partir d'une grille de déviation angulaire et d'une surface de transfert. Dans ce cas, pour la génération des courbes de contraintes selon la méthode explicitée ci-dessus en référence à la figure 19, la définition de la direction de référence $T_R$ pour chaque point de propagation $P_6$ est réalisée de la manière suivante, en référence à la figure 29 :

- définition d'un point projeté $P'_6$ obtenu par projection normale du point de propagation $P_6$ sur le maillage de transfert 5,
- définition d'une direction de référence $T''_R$ audit point projeté $P'_5$, ladite direction de référence provenant ici d'une rosette cartésienne et étant obtenue par transfert de l'axe X de la rosette sur le plan de la maille de transfert à laquelle appartient ledit point projeté $P'_6$;
- définition de la normale $U_2$ à la maille de transfert ;

- définition d'un plan de coupe $A_4$, ledit plan de coupe étant défini par le point projeté $P'_6$, la direction de référence $T''_R$ et la normale $U_2$,
- définition de la ligne d'intersection $D_5$ entre le plan de coupe $A_4$ et le plan $A_5$ de la maille, la direction de référence $T_R$ correspondant à la direction de cette ligne d'intersection.

La direction de propagation au point $P_6$ est ensuite obtenue tel que décrit précédemment en référence à la figure 19, en utilisant la valeur de déviation angulaire maximale obtenue à partir de la grille de déviation angulaire.

Selon autre mode de réalisation, le champ vectoriel est obtenu à partir d'une grille de vecteurs de contrainte, d'une grille de déviation angulaire et d'une surface de transfert. Dans ce cas, pour la définition du plan de coupe $A_4$ ci-dessus, la définition de la direction de référence $T''_R$ est effectuée, non pas à partir de la rosette cartésienne, mais à partir de la grille de vecteurs de contrainte, par projection normale du point $P'_6$ sur la grille de contraintes et définition d'un vecteur $D_1$ selon la méthode de pondération explicitée précédemment en référence à la figure 10. Le vecteur de référence $T''R$ de la maille est ensuite obtenu par un transfert par projection normale de ce vecteur $D_1$ au point $P'_6$.

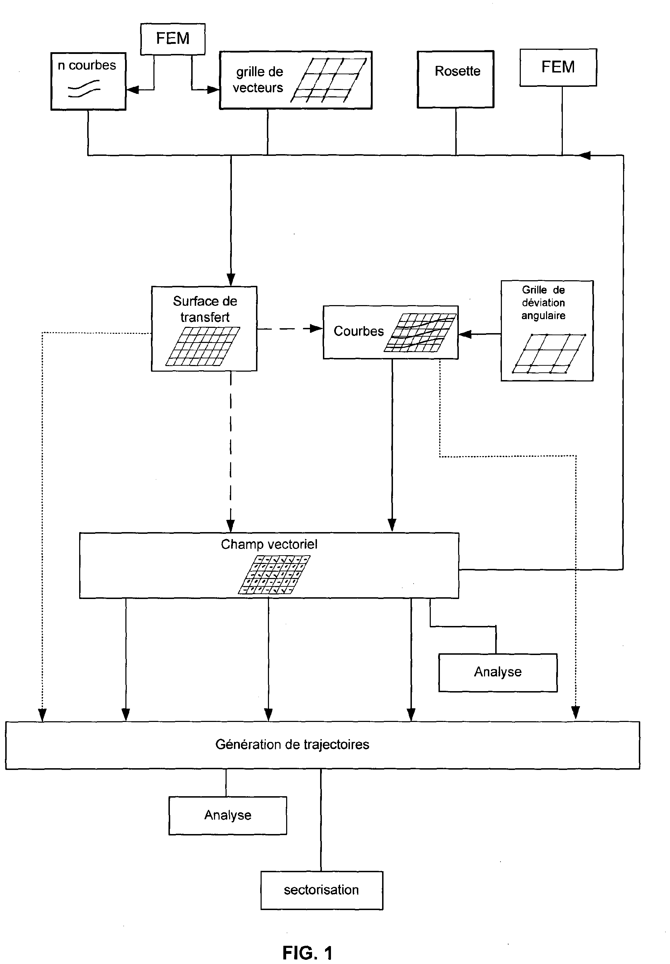

Selon d'autres modes de réalisation, tel qu'illustré à la figure 1, le champ vectoriel est obtenu à partir d'un maillage éléments finis FEM, comprenant des données de direction associées à chaque maille, tel qu'un maillage FEM provenant d'un logiciel de conception, par exemple le logiciel commercialisé sous la dénomination commerciale NASTRAN, avec au moins un angle associé à chaque maille, et une rosette associée audit maillage. Ce maillage FEM peut être utilisé directement en entrée du procédé selon l'invention, ou de préférence être transformé sous forme de grille de vecteurs ou de courbes de contraintes.

Par ailleurs, un champ vectoriel obtenu selon l'invention peut être réintroduit en entrée du procédé selon l'invention pour obtenir un nouveau champ vectoriel.

En fonction du type de surface de drapage, des champs vectoriels différents peuvent être utilisés pour la définition de trajectoires de plis d'orientations différentes. A titre d'exemple, en référence à la figure 28, trois champs vectoriels différents sont définis :

- champ vectoriel pour les plis à 0°
- champ vectoriel pour des plis à 90°
- champ vectoriel pour des plis à +/- 45°

L'utilisation de champ vectoriel permet d'effectuer rapidement des analyses de cisaillement, afin de vérifier que l'angle entre les trajectoires d'orientation différentes rentre bien dans une plage de valeur acceptable. Avantageusement, comme précédemment, les vecteurs directeurs des champs vectoriels sont tous définis pour une orientation à 0°. Dans le cas du champ vectoriel pour les plis à 90°, une rotation de 90° des vecteurs directeurs est effectuée pour générer des trajectoires à 90°. De même, dans le cas du champ vecteurs pour les plis à +/- 45°, une rotation de plus ou moins 45° des vecteurs directeurs est effectuée pour générer les trajectoires à +45° ou -45°. Ces différents champs vectoriels, avec des vecteurs directeurs définis pour une orientation à 0°, permet une comparaison rapide et aisée des vecteurs directeurs pour l'analyse de cisaillement.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

**Revendications**

1. Procédé de définition de trajectoires de fibre sur une surface de drapage pour la réalisation d'au moins un pli d'orientation théorique donnée, **caractérisé en ce qu'**il comprend :

     - la définition d'un maillage éléments finis de la surface de drapage,
     - la définition d'un maillage de transfert d'une surface de transfert continue correspondant à une surface simplifiée de la surface de drapage,

   la direction d'une fibre en un point d'analyse d'une maille de la surface de drapage, étant obtenue par

     - la définition d'un point projeté ($P'_5$, $P'_6$) par projection normale d'un point d'analyse ($P_5$, $P_6$) de ladite maille sur le maillage de transfert (51),
     - la définition d'une direction de référence ($T'_R$, $T''_R$) audit point projeté ($P'_5$), à partir de données de direction associées à une méthode de transfert,
     - la définition de la normale ($U_1$, $U_2$) à la maille de transfert,

- la définition d'un plan de coupe ($A_2$, $A_4$) ledit plan de coupe étant défini par le point projeté ($P'_5$, $P'_6$), ladite direction de référence ($T'_R$, $T''_R$) et ladite normale ($U_1$, $U_2$),
- la définition de la ligne d'intersection ($D_4$, $D_5$) du plan de coupe ($A_2$, $A_4$) avec le plan ($A_3$, $A_5$) de la maille, la direction de la fibre au point d'analyse étant obtenue à partir de la direction de cette ligne d'intersection.

**2.** Procédé de fabrication de pièces en matériau composite par une machine de drapage de fibres automatique, **caractérisé en ce que** les trajectoires de fibres pour le drapage de plis par la machine de drapage sont définies par le procédé selon la revendication 1.

## Patentansprüche

**1.** Verfahren zum Definieren von Faserbahnen auf einer Drapierfläche zur Herstellung von mindestens einer Schicht mit einer gegebenen theoretischen Ausrichtung, **dadurch gekennzeichnet, dass** es Folgendes umfasst:

- die Definition einer Vernetzung von fertigen Elementen der Drapierfläche,
- wobei die Definition einer Vernetzung zur Übertragung einer kontinuierlichen Übertragungsfläche einer vereinfachten Oberfläche der Drapierfläche entspricht,

wobei die Richtung einer Faser an einem Analysepunkt einer Masche der Drapierfläche erhalten wird durch

- die Definition eines projizierten Punkts ($P'_5$, $P'_6$) durch normale Projektion eines Analysepunkts ($P_5$, $P_6$) der Masche auf die Übertragungsvernetzung (51),
- die Definition einer Referenzrichtung ($T'_R$, $T''_R$) an dem projizierten Punkt ($P'_5$), ausgehend von Richtungsdaten, die einem Übertragungsverfahren zugeordnet sind,
- die Definition der Normalen ($U_1$, $U_2$) zur Übertragungsmasche,
- die Definition einer Schnittebene ($A_2$, $A_4$), wobei die Schnittebene durch den projizierten Punkt ($P'_5$, $P'_6$), die Referenzrichtung ($T'_R$, $T''_R$) und die Normale ($U_1$, $U_2$) definiert ist,
- die Definition der Schnittlinie ($D_4$, $D_5$) der Schnittebene ($A_2$, $A_4$) mit der Ebene ($A_3$, $A_5$) der Masche, wobei die Richtung der Faser am Analysepunkt ausgehend von der Richtung dieser Schnittlinie erhalten wird.

**2.** Verfahren zur Herstellung von Teilen aus Verbundmaterial durch eine Maschine zum automatischen Drapieren von Fasern, **dadurch gekennzeichnet, dass** die Faserbahnen für die Drapierung von Schichten durch die Maschine zum Drapieren durch das Verfahren nach Anspruch 1 definiert sind.

## Claims

**1.** Method for defining the trajectories of fiber on a layup surface for producing at least one ply having a given theoretical orientation, **characterized in that** it includes:

- the definition of a finite element mesh of the layup surface,
- the definition of a continuous transfer mesh of a transfer surface corresponding to a simplified surface of the layup surface,

the direction of a fiber at an analysis point of an element of the layup surface, being obtained by

- the definition of a projected point ($P'_5$, $P'_6$) by normal projection of an analysis point ($P_5$, $P_6$) of said element, on the transfer mesh (51),
- the definition of a reference direction ($T'_R$, $T''_R$) at said projected point ($P'_5$), from direction data associated to a method of transfer,
- the definition of the normal ($U_1$, $U_2$) to the transfer element,
- the definition of a cutting plane ($A_2$, $A_4$) said cutting plane being defined by the projected point ($P'_5$, $P'_6$), said reference direction ($T'_R$, $T''_R$) and said normal ($U_1$, $U_2$),
- the definition of the line of intersection ($D_4$, $D_5$) of the cutting plane ($A_2$, $A_4$) with the plane ($A_3$, $A_5$) of the element, the direction of the fiber at the analysis point being obtained from the direction of this line of intersection.

**2.** Method for the manufacture of parts made of composite materials by an automatic fiber layup machine, **characterized**

**in that** the fiber trajectories for the laying up of plies by the layup machine are defined by the method according to claim 1.

**FIG. 1**

FIG. 2

FIG. 3

FIG. 4

FIG. 5

FIG. 7A

Analyse de courbure (m) - Trajectoires 90deg
Rosette Cartesienne

FIG. 7B

FIG. 6A

Analyse de courbure (m) – Trajectoires 0deg
Rosette Cartésienne

FIG. 6B

14

grille de vecteurs

Champ vectoriel

**FIG. 8**

Génération de trajectoires

9

91

93

92

93

$P_1$

92

N

2

$P'_1$

21

T

N

**FIG. 9**

**FIG. 10**

**FIG. 11**

**FIG. 12**

FIG. 14A

Analyse de courbure (m) – Trajectoires 90deg
Grille de vecteurs

FIG. 14B

FIG. 13A

Analyse de courbure (m) - Trajectoires 0deg
Grille de vecteurs

FIG. 13B

17

n courbes

FIG. 15

Champ vectoriel

Génération de trajectoires

FIG. 16

Rosette

Grille de
déviation
angulaire

Courbes

Champ vectoriel

**FIG. 17**

Génération de trajectoires

N'

0°
0°
0°
0°
0°
0°
0°
5°
5°
10°
10°
15°
15°
20°
20°
25°
25°
25°
25°
0°

4

0°
0°
0°
0°
0°
0°
0°
0°
5°
5°
10°
10°
15°
15°
20°
20°
25°
25°
0°
0°
0°
0°

**FIG. 18**

**FIG. 19**

**FIG. 20**

303

**FIG. 21**

332

331

301

311

**FIG. 22**

**Analyse de courbure (m) – Trajectoires 90deg**
**Grille de Déviation Angulaire**

**FIG. 23**

Rosette

Surface de transfert

Champ vectoriel

Génération de trajectoires

**FIG. 24**

$A_2$

$U_1$

5

51

$P'_5$

$T'_R$

109

$D_4$

$P_5$

195

194

191

$A_3$

**FIG. 25**

FIG. 26A

FIG. 26B

FIG. 27

Rosette

Surface de transfert

Courbes

Grille de déviation angulaire

Champ vectoriel

Génération de trajectoires

**FIG. 28**

$A_4$

$U_2$

5

51

$P'_6$

$T''_R$

109

$D_5$

$P_6$

$A_3$

**FIG. 29**

```
┌─────────────────┐  ┌─────────────────┐  ┌─────────────────┐
│ Champ vectoriel │  │ Champ vectoriel │  │ Champ vectoriel │
│      0°         │  │      90°        │  │    +/- 45°      │
└─────────────────┘  └─────────────────┘  └─────────────────┘
```

```
        ┌─────────────────┐
        │  Analyse de     │
        │  cisaillement   │
        └─────────────────┘
```

**FIG. 30**

**EP 3 000 002 B1**

## RÉFÉRENCES CITÉES DANS LA DESCRIPTION

**Documents brevets cités dans la description**

- US 5041179 A